# EUROPEAN PATENT APPLICATION

(11) **EP 4 617 857 A1**
(43) Date of publication of application: **17.09.2025**
(21) Application number: 25163176.8
(22) Date of filing: 12.03.2025
(51) Int. Cl.: G06F 8/61

(54) **SOFTWARE INSTALLATION USING MOUNTED FILE SYSTEM**

(30) Priority: 14.03.2024 US 202418605137
(71) Applicant: Arista Networks, Inc., Santa Clara, CA 95054 (US)
(72) Inventor: NOWAK, Bartlomiej Stanislaw, Santa Clara, CA 95054 (US); SUN, Eudean Michael, Santa Clara, CA 95054 (US); BRINKLEY, James Samuel, Santa Clara, CA 95054 (US)
(74) Representative: Hoffmann Eitle

(57) **Abstract**

The present disclosure describes a technique for installing extension packages on a target computing device. The extension package is downloaded onto the target device and stored on disk or other non-volatile storage (e.g., flash memory). The target device mounts a file system in the extension package onto a mount point on the file system of the target device. The target device runs an installation script for each feature in the extension package. The installation script generates information so that access to the feature file from non-volatile storage. Because the feature files that constitute a feature are not physically stored on the target file system, the feature files do not consume the storage space of the target file system.

## Description

### BACKGROUND

The present disclosure is directed to installing software packages on a computing device to enhance operation of applications running on the computing device such as adding new capabilities, enhancing existing capabilities, bug fixes, and so on (collectively referred to herein as "software features"). Conventionally, the files that constitute the software features in a package are copied from the package into the file system of the computing device. In a computing device that has limited memory, this may not be practical if the features require too much file system storage. This can be a problem in a computing device that loads its file system entirely on RAM during operation (i.e., a RAM-based file system). Not all the software features in a package may be available to the computing device if the RAM-based file system does not have enough file space to store all the components of the software features.

### BRIEF DESCRIPTION OF THE DRAWINGS

With respect to the discussion to follow and in particular to the drawings, it is stressed that the particulars shown represent examples for purposes of illustrative discussion, and are presented in the cause of providing a description of principles and conceptual aspects of the present disclosure. In this regard, no attempt is made to show implementation details beyond what is needed for a fundamental understanding of the present disclosure. The discussion to follow, in conjunction with the drawings, makes apparent to those of skill in the art how embodiments in accordance with the present disclosure may be practiced. Similar or same reference numbers may be used to identify or otherwise refer to similar or same elements in the various drawings and supporting descriptions. In the accompanying drawings:
FIG. 1 shows an illustrative computing system adapted in accordance with the present disclosure.
FIG. 2 illustrates a memory model of a computing device in accordance with some embodiments.
FIG. 3 illustrates details for an extension package in accordance with some embodiments.
FIG. 4 illustrates overlaying file systems in accordance with some embodiments.
FIG. 5 shows operations for installing an extension in accordance with the present disclosure.
FIGs. 6A, 6B, and 6C illustrate the operations described in FIG. 5.

### DETAILED DESCRIPTION

Embodiments in accordance with the present disclosure can reduce the impact on the memory requirements of the file system on a computing device when installing a package comprising one or more features for applications running on the computing device. In accordance with the present disclosure, a package contains a file system (referred to herein as the "package" file system) to store the files (feature files) that constitute the features provided in the package; e.g., new functionality, extensions to existing functions, bug fixes, etc. An installation script is included or otherwise associated with the package. The package can be downloaded onto the computing device and stored on disk or other non-volatile storage (e.g., flash memory, magnetic storage, etc.) on the computing device.

The computing device mounts the package file system onto a mount point on the file system of the computing device (the target file system). The computing device then runs the installation script to install the package. The installation script can:
- Mount the package file system to a mount point in the target file system.
- Create links (symbolic links, symlinks) in the target file system for each feature file in the package where the links are at locations in the target file system that correspond to the directory structure of the feature files as they are stored in the package file system.

Advantageously, the data that constitutes the feature file is not copied to the target file system, but rather remains in the package file system in non-volatile memory. Because the feature files that constitute a feature are not physically stored on the target file system, the feature files do not consume storage space on the target file system. The target file system needs only to allocate space to store links to the feature files in the package file system.

In the following description, for purposes of explanation, numerous examples and specific details are set forth in order to provide a thorough understanding of embodiments of the present disclosure. Particular embodiments as expressed in the claims may include some or all of the features in these examples, alone or in combination with other features described below, and may further include modifications and equivalents of the features and concepts described herein.

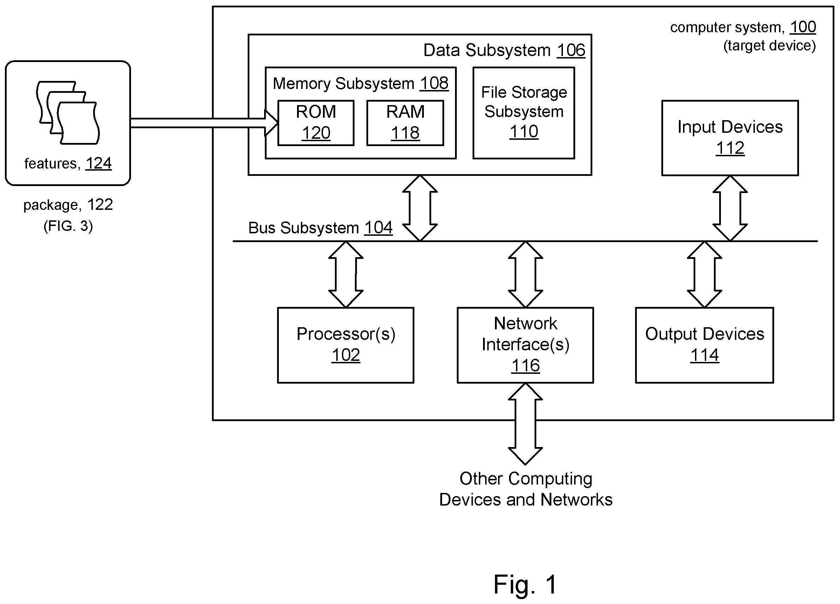

FIG. 1 depicts a simplified block diagram of an example computer system 100 according to certain embodiments. As shown in FIG. 1, computer system 100 includes one or more processors 102 that communicate with a number of peripheral devices via bus subsystem 104. These peripheral devices include data subsystem 106 (comprising memory subsystem 108 and file storage subsystem 110), user interface input devices 112, user interface output devices 114, and network interface subsystem 116.

Bus subsystem 104 can provide a mechanism that enables the various components and subsystems of computer system 100 to communicate with each other as intended. Although bus subsystem 104 is shown schematically as a single bus, alternative embodiments of the bus subsystem can utilize multiple buses.

Network interface subsystem 116 can serve as an interface for communicating data between computer system 100 and other devices; e.g., network devices, client computing devices for remote access, etc. Embodiments of network interface subsystem 116 can include, e.g., an Ethernet card, a Wi-Fi and/or cellular adapter, and/or the like. Local access to computer system 100 can be provided via input devices 112 (e.g., keyboard, pointing devices, etc.) and output devices 114 (e.g., a computer monitor, etc.).

Data subsystem 106, comprising memory subsystem 108 and file/disk storage subsystem 110, represents non-transitory computer-readable storage media that can store program code and/or data, which when executed by processor 102, can cause processor 102 to perform operations in accordance with embodiments of the present disclosure.

Memory subsystem 108 includes memory circuits such as main random access memory (RAM) 118 for storage of instructions and data during program execution and read-only memory (ROM) 120 in which fixed instructions and data are stored. File storage subsystem 110 can provide persistent (i.e., non-volatile) storage for program and data files, and can include a magnetic or solid-state hard disk drive, an optical drive along with associated removable media (e.g., CD-ROM, DVD, Blu-Ray, etc.), a removable flash memory-based drive or card, and/or other types of storage media known in the art.

It should be appreciated that computer system 100 is illustrative and many other configurations having more or fewer components than system 100 are possible.

Functionality in computer system 100 can be enhanced with features 124 contained in a feature package 122. Enhancements can include fixing bugs, adding capability to existing functionality, adding new functionality and so on. Package 122 can be installed in accordance with the present disclosure. Details of package 122 will now be discussed. For discussion purposes, a computer system on which to install a feature package in accordance with the present disclosure will be referred to herein as the "target device."

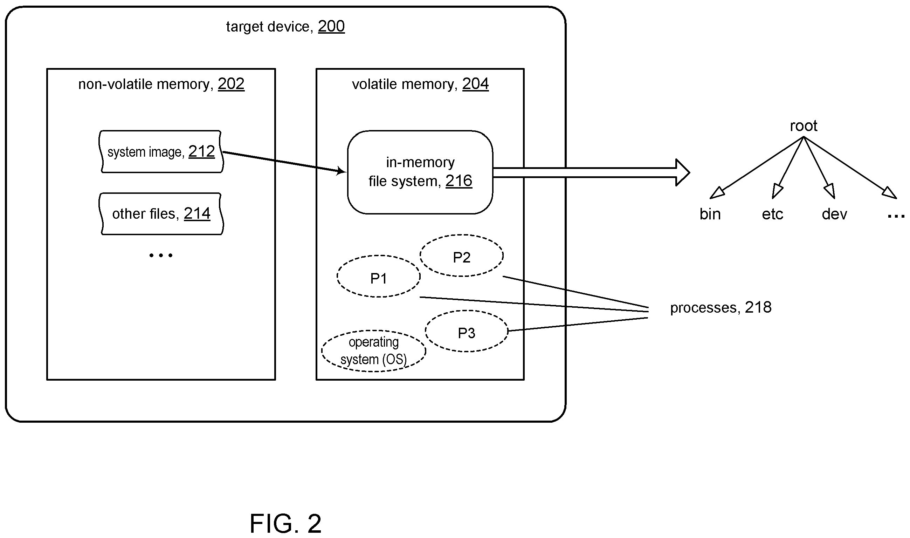

FIG. 2 is a schematic representation of the memory model in a target device 200 in accordance with some embodiments of the present disclosure. In some embodiments, target device 200 can include non-volatile memory 202 and volatile memory 204. An example of volatile memory 204 is RAM. Examples of non-volatile memory 202 include flash memory such as NAND flash or NOR flash, disk storage, and the like.

In some embodiments, the non-volatile memory 202 can store persistent data objects such as a system image 212 and other system files. In some embodiments, target device 200 employs an in-memory file system 216 that resides in volatile memory 204. The file system 216 can include a root node and sub-directories under the root node. In some embodiments, file system 216 can be created/initialized as part of booting up or rebooting the target device 200. For example, in some embodiments, the system image 212 can include an image of a clean file system that is copied into volatile memory 204 as in-memory file system 216 during the boot up or reboot process. The file system 216 can be further customized at boot up with information contained in other files 214, such as configuration files. Volatile memory 204 also provides respective process address spaces for processes 218 that run on the target device.

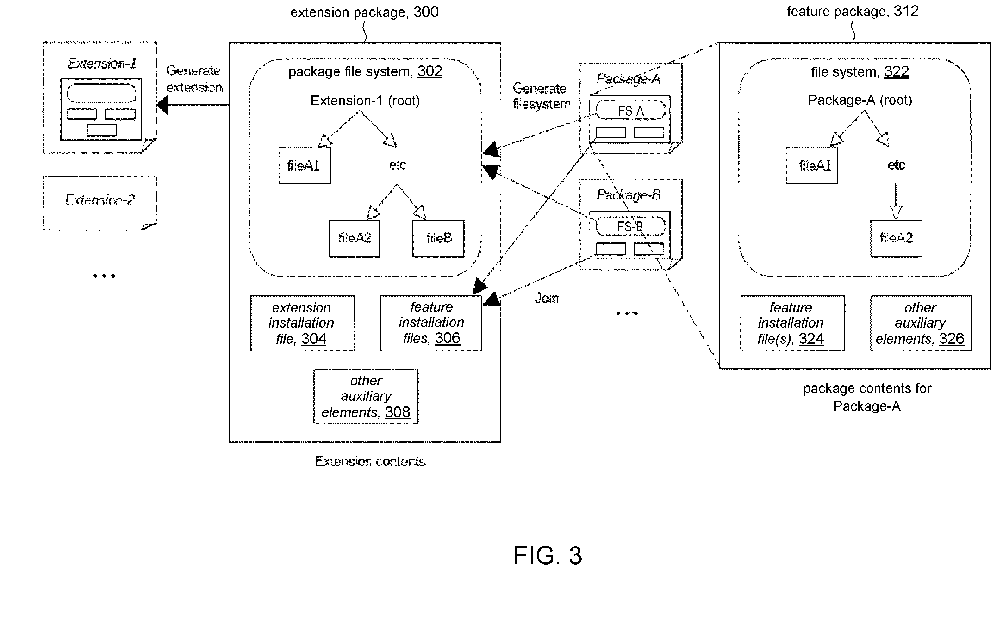

FIG. 3 is a diagrammatic representation of an extension package 300, in accordance with some embodiments. Extension package 300 contains data objects for one or more feature packages 312 to be installed in the target device (e.g., 200, FIG. 2). Each feature package 312 (e.g., Package-A, Package-B, etc.) contains the files for adding a feature to the target device, such as adding or enhancing functionality in the target device, configuring the target device, fixing a bug, etc. The contents for feature Package-A, for example, includes constituent feature files (fileA1, fileA2, etc.) that implement the feature. The feature files can be organized in a package file system 322 in a directory structure required by the feature. For example, the feature contained in Package-A may require fileA1 to be in the root directory "/" on the target file system of the target device and fileA2 to be in the directory / etc. The package file system 322 can mirror the directory structure of the target file system in terms of the directory hierarchy in which the feature files are stored. So, for example, fileA1 would be stored in the root directory /ExtensionA of the package file system, and likewise fileA2 would be stored in /ExtensionA/etc. In addition, the package 312 can include feature installation files 324 comprising instructions (e.g., installation scripts, etc.) for installing the feature onto the target device. Depending on the particular feature, the package 312 may also include additional auxiliary elements 326 specific to the feature; e.g., version number of the installed package, packages that conflict with the installed package, descriptive information of the installed feature(s), data compression if any, etc.

The extension package 300 comprises one or more feature packages 312 (e.g., Package-A, Package-B, etc.) to be installed in the target device. The packages 312 can be incorporated into various data objects in extension package 300. For example, the extension package 300 includes a package file system 302 to store the feature files of the packages 312. A feature installation files data object 306 represents a collection of the individual installation files 324 from each package 312 contained in the extension package 300. Likewise, the auxiliary elements data object 308 is a collection of any additional elements specific to the features. The extension package 300 can be based on any suitable package format recognized by package management tools such as, for example, Red-hat Package Manager (RPM), deb package format, GNU Guix, OpenPKG, etc.

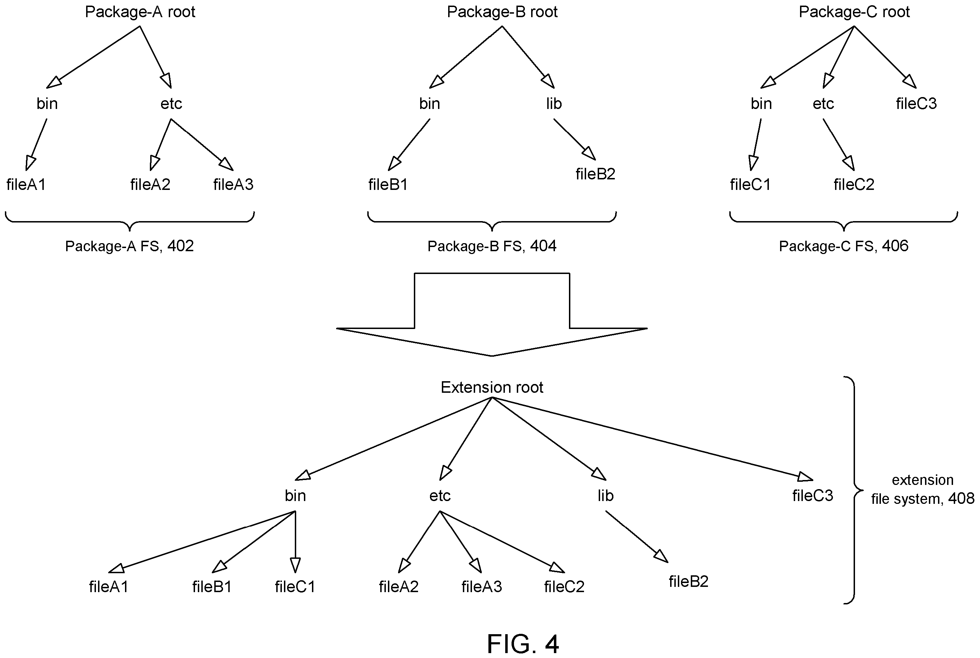

The package file system 302 combines the feature files, stored in the feature file system 322 of each package 312, into a single file system rooted at a root directory which in the example in FIG. 3 is /Extension-1. The directory structure of the file system 302 includes the directory structures of the feature file systems 322 in all of the feature packages 312 contained in the extension package. This characteristic of the package file system 302 is illustrated in the simplified example shown in FIG. 4. The feature file systems 402, 404, 406 of three packages (Package-A, Package-B, Package-C) are shown. The resulting package file system 408 has a directory structure that combines the directory structures of all three feature file systems.

Completing the description of FIG. 3, the extension package 300 further comprises an extension installation file 304. This file comprises instructions (e.g., installation script, etc.) for installing the extension package on the target device in accordance with the present disclosure. The discussion will now turn to this aspect of the present disclosure.

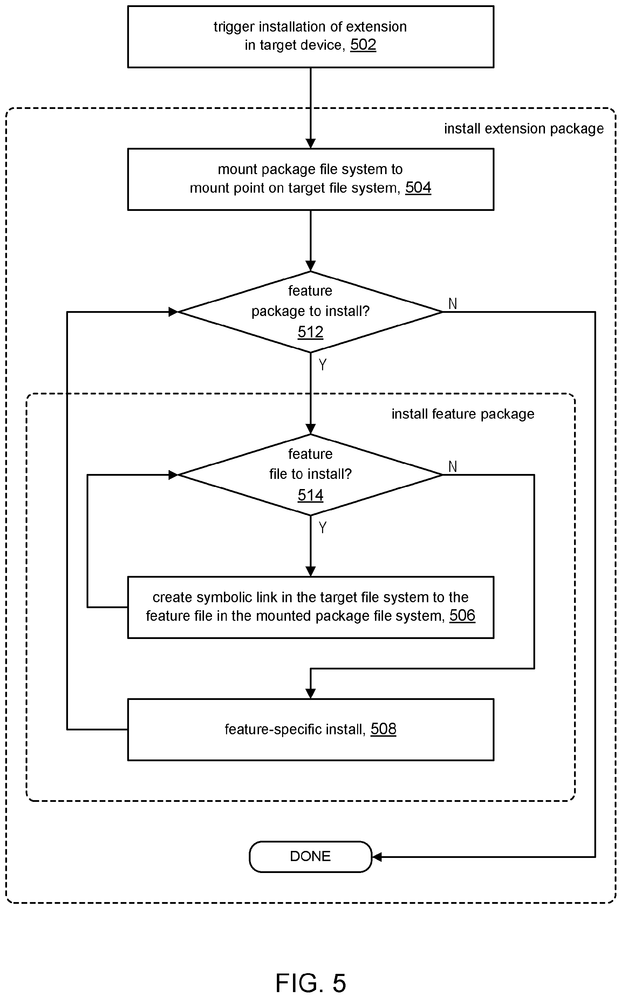

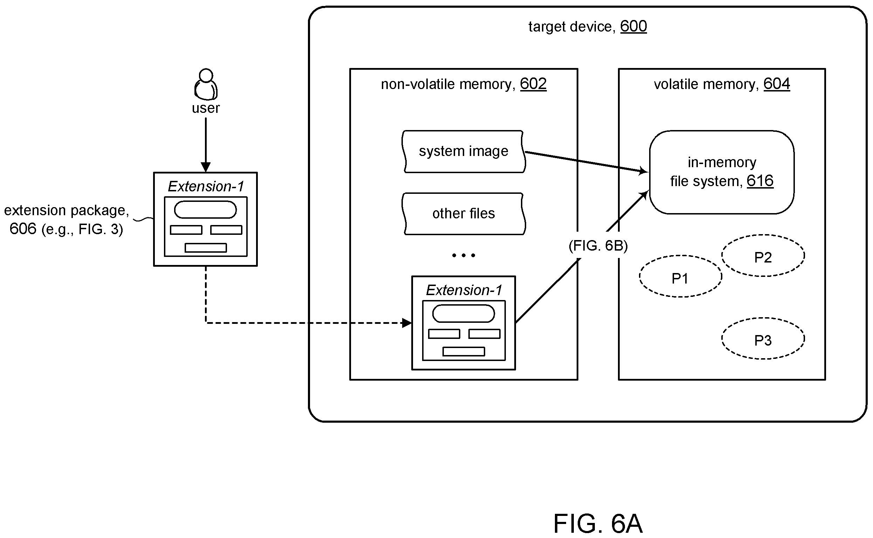

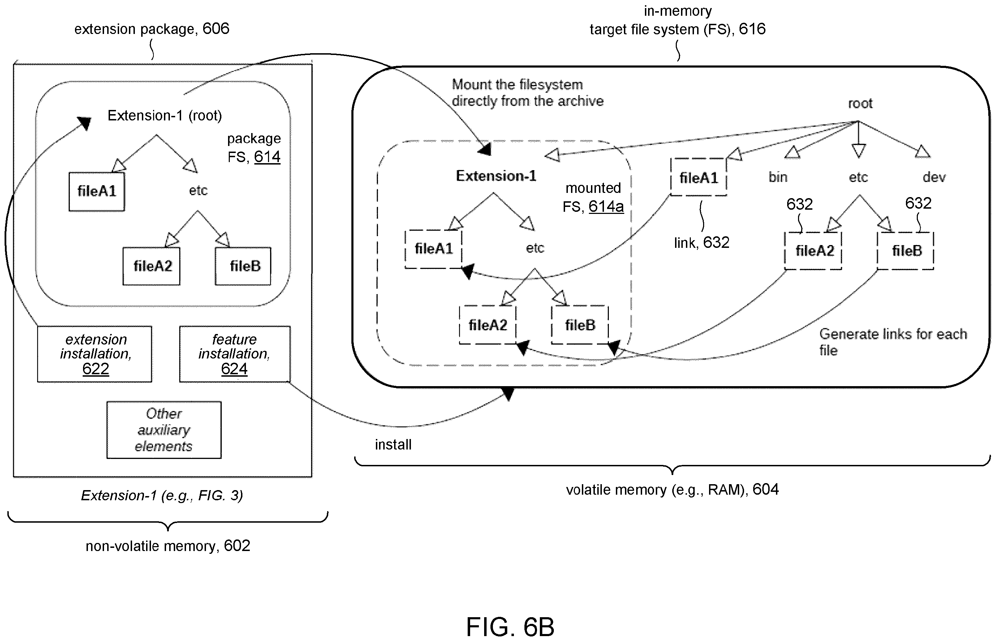

Referring to FIGs. 5, 6A, and 6B, the discussion will now turn to a high level description of operations and processing on a target device (e.g., computer system 100, FIG. 1) to install features in accordance with the present disclosure, with references to the illustrative examples shown in FIGs. 6A and 6B. In some embodiments, the target device can include computer executable program code (e.g., stored on a non-transitory computer-readable storage memory device), which when executed by a processor (e.g., 102, FIG. 1), can cause the target device to perform processing in accordance with FIG. 5. The operation and processing blocks described below are not necessarily executed in the order shown. Operations can be combined or broken out into smaller operations in various embodiments. Operations can be allocated for execution among one or more concurrently executing processes and/or threads.

At operation 502, the target device can be triggered to initiate processing to install one or more extension packages on the target device. In some embodiments, for example, a user (e.g., network administrator) can download one or more extension packages onto the target device which can be stored in a non-volatile memory of the target device. FIG. 6A, for example, shows an extension package 606 stored in non-volatile memory 602 of target device 600. The user can initiate processing to install extension package 606 as part of downloading the extension package. In some embodiments, installation of previously downloaded extension packages can be performed as part of booting up the target device; for example, when a user manually reboots the target device, when the target device powers up, etc.

At operation 504, the target device can install the extension package on the target device 600. In some embodiments, for example, the instructions for installing the extension package on the target device can be stored in the extension installation file 622 of FIG. 6B. Installation of the extension package can include the target device mounting the package file system (e.g., 614, FIG. 6B) at a "mount point" on the target file system 616 as mounted file system 614a. File system mount points are known. Generally, a file system mount point is a directory in one file system that is logically linked to (references) another file system. In the context of the present disclosure, the file system mount point on target file system 616 is the directory Extension-1 under "/". The directory Extension-1 is a mount point that references the root directory /Extension-1 in the package file system 614. Notably, the files in the package file system 614 are not copied to the target file system 616 but rather remain in non-volatile memory 602.

At decision point 512, if there is an uninstalled feature package in the extension package (installed at operation 504), then the target device can continue processing at decision point 514 to install the feature package. If there are no more uninstalled feature packages in the extension package, then processing can be deemed complete.

At decision point 514, if there is an uninstalled feature file in the feature package, then the target device can continue processing at operation 506 to install the feature file in accordance with the present disclosure. If there are no more uninstalled feature files in the feature package, then the target device can continue processing at operation 508 to complete installation of the feature package.

At operation 506, the target device can create a symbolic link (symlink, link, etc.) in the target file system 616 that links to the feature file in the mounted file system 614a. More specifically, the symbolic link for the feature file is created at a location relative to the root directory of the target file system that corresponds to its location in the package file system 614 relative to the root directory of the package file system. For example, the feature file fileA2 for Package-A in the package file system 614 is located on the path:
/Extension-1/etc/fileA2,
where /Extension-1 is the root directory. Accordingly, the symbolic link 632 in the target file system 616 for that feature file is located on the path:
/etc/fileA2.

Symbolic links are known. Generally, a symbolic link to a file is a special file that contains a pointer or reference to either the corresponding physical file (contains the actual file data) or another symbolic link. A symbolic link does not contain the actual data of the physical file. In the context of the present disclosure, a symbolic link is created in target file system 616 that points to a location in the mounted file system 614a which in turn is another symbolic link. The symbolic link in the mounted file system 614a points to the corresponding physical file in the package file system 614 stored in non-volatile memory 602 which contains the actual data of the file. This sequence of following a symbolic link to its corresponding physical file can be referred to as following the symbolic link or resolving the symbolic link. In FIG. 6B, for example, the symbolic link 632 to feature file fileA1 in the target file system 616 resolves to the corresponding physical file in non-volatile memory 602. Likewise, with the symbolic links to feature files fileA2 (for Package-A) and fileB (for Package-B). The target device can loop back to decision point 514 to install another feature file in the feature package. The 514 → 506 loop continues until all the feature files of the feature package have been processed.

At operation 508, the target device can complete installation of the feature package after its constituent feature files have been installed on the target file system. The target device can perform additional installation operations that are specific to the feature, for example, by executing feature-specific installation instructions contained in feature installation file 624. Whereas the extension installation instructions 622 comprise instructions to install the files for a given feature in the correct locations on the target file system 616, the feature-specific installation instructions can perform specific actions required by the given feature. For example, if the feature is a bug fix, the feature files may include software modules that need to be installed on the target device to fix the bug; the feature-specific installation instructions can invoke a feature file that installs those software modules. As another example, a feature file for a given feature may need to be configured with parameters of the target device (e.g., its memory size, IP address, etc.); the feature-specific installation instructions for the given feature can invoke a feature file that performs the needed configurations.

Installation of the feature package can be deemed complete. The target device can loop back to decision point 512 to install another feature package in the extension package. The 512 → 508 loop continues until all the feature packages of the extension package have been processed.

Installing features in accordance with the present disclosure does not require physically storing the associated feature files on the target file system. As such, the operating system (OS) running on the target device does not need to allocate storage on the target file system to store any feature files. Instead, the target file system stores symbolic links to the feature files. A symbolic link is simply a reference to the physical file, and so requires significantly less storage than the corresponding physical file.

This space-conserving aspect of the present disclosure is important in an in-memory (RAM-based) file system where RAM is generally a limited resource. For example, using conventional techniques to install a feature on a target device having a RAM-based file system requires allocating RAM for the file system in order to store the associated features files on the file system. If RAM is limited, it may not be possible to install the feature without impacting operation of the target device. In contrast, installation of the feature in accordance with the present disclosure obviates the need to physically store the associated feature files on the file system, requiring instead only enough file system storage to store symbolic links to the feature files in non-volatile memory.

It is noted that when an application running on the target device accesses the content of a feature file through its symbolic link, the operating system will follow the symbolic link to the physical file in non-volatile memory. Merely to illustrate, consider the feature files fileA1 and fileA2 in Extension-1 shown in FIG. 6B. If an application wants to open the feature file fileA2 (e.g., a library file) for instance, the application can execute a function such as:
dlopen("/etc/fileA2.so", flags); to load the library file. The operation system will access the location at "/etc/fileA2", see that it is a symbolic link, follow the link to the mount point "/Extension-1", and from there to the physical file stored in non-volatile memory 602.

The operating system can allocate RAM and read the contents of the feature file from non-volatile memory into the allocated RAM. However, the RAM is allocated to the process address space of the running application and is not allocated to the target file system. The allocated RAM can be reused by the operating system when the application terminates, or when the operating system wants to use this memory for a different purpose as part of its memory management routines. Thus, although RAM is consumed for the feature file, the RAM is allocated for the running application and is eventually returned/reused by the operating system. By comparison, a conventional installation of the feature would "permanently" allocate RAM to store the feature file in the file system; the allocated RAM would no longer be available to the operating system, at least until the target device is shut down, rebooted, or if the extension is uninstalled.

### Environment Variables

The foregoing describes embodiments of the present disclosure using symbolic links to access feature files in an extension. In accordance with other embodiments of the present disclosure, access to feature files can include the use of operating system (OS) environment variables. Unix-based OSes such as Linux, for example, support the PATH variable. PATH is an environment variable containing an ordered list of pathnames that the OS will search when looking for a file. For example, the PATH variable can include the following:
/usr/local/sbin:/usr/local/bin:/bin: The list is ordered; so that the OS will first look in the /usr/local/sbin directory, then the /usr/local/bin directory, and then /bin. It will be appreciated that other OSes can support alternative and/or additional environment variables. The Linux OS, for example, includes an environment variable called LD_LIBRARY_PATH for searching library directories. In accordance with some embodiments of the present disclosure, access to feature files in an extension can leverage environment variables supported by the OS on the target device.

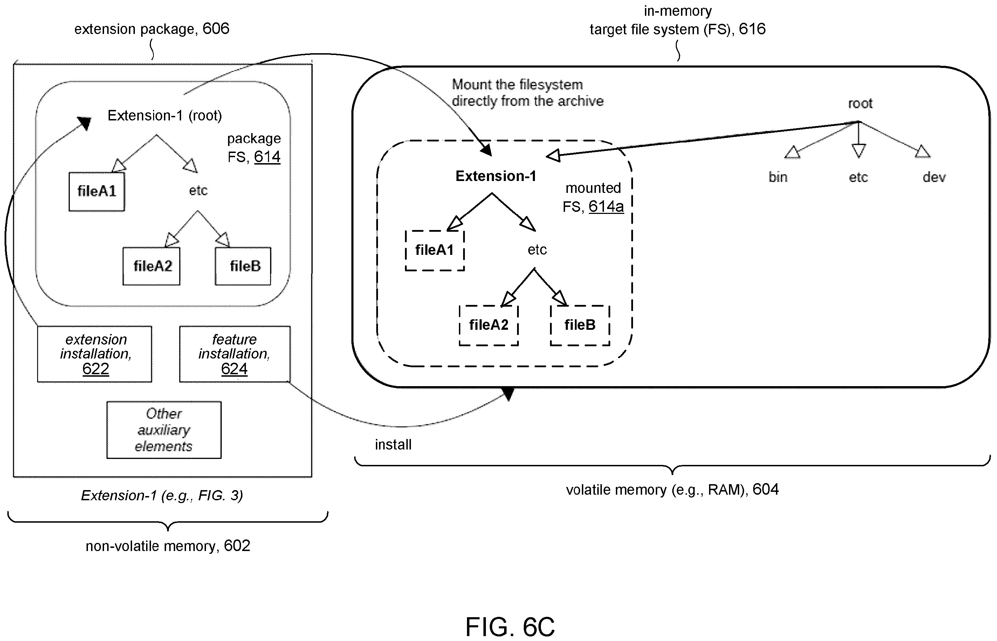

Referring to FIG. 6C, in accordance with some embodiments, installation of an extension package (e.g., Extension-1) using environment variables such as PATH, LD_LIBRARY_PATH, and others can include:
- Mounting the package file system at a "mount point" on the target file system as a mounted file system, for example, as described above in connection with operation 504 (FIG. 5). Referring to FIG. 6C, the package file system 614 is mounted on target file system 616 as a mounted file system 614a with the pathname /Extension-1.
- Running an installation script (e.g., 624, FIG. 6C and operation 508, FIG. 5) specific to the installed features to update one or more environment variables supported by the OS running on the target device to include pathnames of where the constituent feature files are located. For example, instructions in the feature installation file 624 can include the following script:
   PATH = $PATH:/Extension-1:/Extension-1/etc
   which would add /Extension-1 and /Extension-1/etc to the list of pathnames. For example, suppose prior to installing the extension that PATH is:
   /bin:/etc:

After running the above script during installing, the modified PATH would become:
/bin:/etc:/Extension-1:/Extension-1/etc:

When an application running on the target device accesses the content of a feature file, the operating system can use the modified PATH variable to get to the physical file in non-volatile memory 602. As an example, consider the feature file fileA1 in Extension-1 shown in FIG. 6C. If an application wants to run the feature file fileA1 for instance, the OS can use the modified PATH variable to look for fileA1. The OS would first look for fileA1 in /bin on file system 614a but not find it and then in /etc, again not finding fileA1. When the OS accesses the mount point /Extension-1, the OS will redirect to the package file system 614 in non-volatile memory 602 and find fileA1 in the directory /Extension-1 on the package filesystem.

In accordance with the present disclosure, feature files (e.g., programs, library files, etc.) stored in a non-volatile memory can be accessed from the non-volatile memory by generating suitable path information in the target device. The path information directs the OS to access the feature files from the non-volatile memory so that the feature files do not need to be stored in RAM.

### Further Examples

Features described above as well as those claimed below may be combined in various ways without departing from the scope hereof. The following examples illustrate some possible, non-limiting combinations:
(A1) A method for installing a software feature on a computing device, the method comprising: storing an extension package on the computing device, the extension package comprising a file system ("package file system") and a plurality of feature files organized in a hierarchy of directories on the package file system, wherein the feature files constitute a software feature for an application that runs on the computing device, the extension package further comprising installation instructions stored therein for installing the feature files; and using the installation instructions to install the feature files in a file system of the computing device ("target file system") that is separate from the package file system, wherein the installation instructions include: identifying the location of the package file system within the package file; mounting the package file system to a mount point on the target file system; and generating path information in the computing device that indicates the location of the feature files relative to the mount point on the target file system, wherein when an application running on the computing device accesses one of the feature files, the computing device uses the generated path information to find that feature file on the package file system, wherein read/write operations are performed on that feature file on the package file system.
(A2) For the method denoted as (A1), the extension package comprising the package file system and the feature files are stored in a first physical memory of the computer device, and the target file system is stored in a second physical memory of the computer device different from the first physical memory.
(A3) For the method denoted as any of (A1) through (A2), the first physical memory is non-volatile memory, and the second physical memory is volatile memory.
(A4) For the method denoted as any of (A1) through (A3), generating the path information comprises creating a symbolic link to each feature file in the package file system at a location in the target file system, wherein the application accesses one of the feature files during execution via its symbolic link in the target file system.
(A5) For the method denoted as any of (A1) through (A4), the feature files are stored in a directory structure of the package file system, wherein the feature files are linked to the target file system in a directory structure in the target file system same as the directory structure of the package file system.
(A6) For the method denoted as any of (A1) through (A5), the path information comprises a list of directories, wherein one of the directories in the list of directories is the mount point on the target file system, wherein when the application running on the computing device accesses the feature file, the computing device uses the list of directories in the path information to find the feature file.
(A7) For the method denoted as any of (A1) through (A6), content of the feature files are not copied to the target file system.
(B1) A network device comprising: one or more computer processors; and a computer-readable storage device comprising instructions for controlling the one or more computer processors to: store an extension package on the computing device, the extension package comprising a file system ("package file system") and a plurality of feature files organized in a hierarchy of directories on the package file system, wherein the feature files constitute a software feature for an application that runs on the computing device, the extension package further comprising installation instructions stored therein for installing the feature files; and use the installation instructions to install the feature files in a file system of the computing device ("target file system") that is separate from the package file system, wherein the installation instructions control the one or more computer processors to: mount the package file system to a mount point on the target file system; and generate path information in the computing device that indicates the location of the feature files relative to the mount point on the target file system, wherein when an application running on the computing device accesses a feature file, the computing device uses the generated path information to find that feature file on the package file system, wherein read/write operations are performed on that feature file on the package file system.
(B2) For the network device denoted as (B1), the extension package and its feature files are stored in a first physical memory of the computer device and the target file system is stored in a second physical memory of the computer device different from the first physical memory.
(B3) For the network device denoted as any of (B1) through (B2), the first physical memory is non-volatile memory, and the second physical memory is volatile memory.
(B4) For the network device denoted as any of (B1) through (B3), generating the path information comprises creating a symbolic link to each feature file in the package file system at a location in the target file system, wherein the application accesses one of the feature files during execution via its symbolic link in the target file system.
(B5) For the network device denoted as any of (B1) through (B4), the feature files are stored in a directory structure of the package file system, wherein the feature files are linked to the target file system in a directory structure in the target file system same as the directory structure of the package file system.
(B6) For the network device denoted as any of (B1) through (B5), the path information comprises a list of directories, wherein one of the directories in the list of directories is the mount point on the target file system, wherein when the application running on the computing device accesses the feature file, the computing device uses the list of directories in the path information to find the feature file.
(B7) For the network device denoted as any of (B1) through (B6), content of the feature files are not copied to the target file system.
(C1) A non-transitory computer-readable storage device in a network device, the non-transitory computer-readable storage device having stored thereon computer executable instructions, which when executed, cause the network device to: store an extension package on the computing device, the extension package comprising a file system ("package file system") and a plurality of feature files organized in a hierarchy of directories on the package file system, wherein the feature files constitute a software feature for an application that runs on the computing device, the extension package further comprising installation instructions stored therein for installing the feature files; and use the installation instructions to install the feature files in a file system of the computing device ("target file system") that is separate from the package file system, wherein the installation instructions cause the network device to: mount the package file system to a mount point on the target file system; and generate path information in the computing device that indicates the location of the feature files relative to the mount point on the target file system, wherein when an application running on the computing device accesses a feature file, the computing device uses the generated path information to find that feature file on the package file system, wherein read/write operations are performed on that feature file on the package file system.
(C2) For the non-transitory computer-readable storage device denoted as (C1), the extension package and its feature files are stored in a first physical memory of the computer device and the target file system is stored in a second physical memory of the computer device different from the first physical memory.
(C3) For the non-transitory computer-readable storage device denoted as any of (C1) through (C2), the first physical memory is non-volatile memory, and the second physical memory is volatile memory.
(C4) For the non-transitory computer-readable storage device denoted as any of (C1) through (C3), generating the path information comprises creating a symbolic link to each feature file in the package file system at a location in the target file system, wherein the application accesses one of the feature files during execution via its symbolic link in the target file system.
(C5) For the non-transitory computer-readable storage device denoted as any of (C1) through (C4), the feature files are stored in a directory structure of the package file system, wherein the feature files are linked to the target file system in a directory structure in the target file system same as the directory structure of the package file system.
(C6) For the non-transitory computer-readable storage device denoted as any of (C1) through (C5), the path information comprises a list of directories, wherein one of the directories in the list of directories is the mount point on the target file system, wherein when the application running on the computing device accesses the feature file, the computing device uses the list of directories in the path information to find the feature file.

The above description illustrates various embodiments of the present disclosure along with examples of how aspects of the present disclosure may be implemented. The above examples and embodiments should not be deemed to be the only embodiments, and are presented to illustrate the flexibility and advantages of the present disclosure as defined by the following claims. Based on the above disclosure and the following claims, other arrangements, embodiments, implementations and equivalents may be employed without departing from the
scope of the disclosure as defined by the claims.

## Claims

1. A method for installing a software feature on a computing device, the method comprising:
storing an extension package on the computing device, the extension package comprising a file system ("package file system") and a plurality of feature files organized in a hierarchy of directories on the package file system, wherein the feature files constitute a software feature for an application that runs on the computing device, the extension package further comprising installation instructions stored therein for installing the feature files; and
using the installation instructions to install the feature files in a file system of the computing device ("target file system") that is separate from the package file system, wherein the installation instructions include:
identifying the location of the package file system within the package file;
mounting the package file system to a mount point on the target file system; and
generating path information in the computing device that indicates the location of the feature files relative to the mount point on the target file system,
wherein when an application running on the computing device accesses one of the feature files, the computing device uses the generated path information to find that feature file on the package file system, wherein read/write operations are performed on that feature file on the package file system.

2. The method of claim 1, wherein the extension package comprising the package file system and the feature files are stored in a first physical memory of the computer device, and the target file system is stored in a second physical memory of the computer device different from the first physical memory.

3. The method of claim 2, wherein the first physical memory is non-volatile memory, and the second physical memory is volatile memory.

4. The method of any preceding claim, wherein generating the path information comprises creating a symbolic link to each feature file in the package file system at a location in the target file system, wherein the application accesses one of the feature files during execution via its symbolic link in the target file system.

5. The method of claim 4, wherein the feature files are stored in a directory structure of the package file system, wherein the feature files are linked to the target file system in a directory structure in the target file system same as the directory structure of the package file system.

6. The method of any preceding claim, wherein the path information comprises a list of directories, wherein one of the directories in the list of directories is the mount point on the target file system, wherein when the application running on the computing device accesses the feature file, the computing device uses the list of directories in the path information to find the feature file.

7. The method of claim 1, wherein content of the feature files are not copied to the target file system.

8. A network device comprising:
one or more computer processors; and
a computer-readable storage device comprising instructions for controlling the one or more computer processors to:
store an extension package on the network device, the extension package comprising a file system ("package file system") and a plurality of feature files organized in a hierarchy of directories on the package file system, wherein the feature files constitute a software feature for an application that runs on the network device, the extension package further comprising installation instructions stored therein for installing the feature files; and
use the installation instructions to install the feature files in a file system of the network device ("target file system") that is separate from the package file system, wherein the installation instructions control the one or more computer processors to:
mount the package file system to a mount point on the target file system; and
generate path information in the network device that indicates the location of the feature files relative to the mount point on the target file system,
wherein when an application running on the network device accesses a feature file, the network device uses the generated path information to find that feature file on the package file system, wherein read/write operations are performed on that feature file on the package file system.

9. The network device of claim 8, wherein the extension package and its feature files are stored in a first physical memory of the network device and the target file system is stored in a second physical memory of the network device different from the first physical memory.

10. The network device of claim 9, wherein the first physical memory is non-volatile memory, and the second physical memory is volatile memory.

11. The network device of any of claims 8 to 10, wherein generating the path information comprises creating a symbolic link to each feature file in the package file system at a location in the target file system, wherein the application accesses one of the feature files during execution via its symbolic link in the target file system.

12. The network device of claim 11, wherein the feature files are stored in a directory structure of the package file system, wherein the feature files are linked to the target file system in a directory structure in the target file system same as the directory structure of the package file system.

13. The network device of any of claims 8 to 12, wherein the path information comprises a list of directories, wherein one of the directories in the list of directories is the mount point on the target file system, wherein when the application running on the network device accesses the feature file, the network device uses the list of directories in the path information to find the feature file.

14. The network device of any of claims 8 to 13, wherein content of the feature files are not copied to the target file system.

15. A computer-readable storage device having stored thereon computer executable instructions which, when executed by a computing device, cause the computing device to perform a method as set out in at least one of claims 1 to 7.
